Europäisches Patentamt

European Patent Office

Office européen des brevets

(11) Veröffentlichungsnummer: **0 309 905 B1**

## EUROPÄISCHE PATENTSCHRIFT

(45) Veröffentlichungstag der Patentschrift: **02.03.94**

(51) Int. Cl.5: **H04N 7/167**

(21) Anmeldenummer: **88115557.6**

(22) Anmeldetag: **22.09.88**

(54) **Verfahren und Schaltungsanordnung zur Erkennung eines in einem Video-Signal enthaltenen Signums.**

(30) Priorität: **30.09.87 DE 3733013**

(43) Veröffentlichungstag der Anmeldung:
**05.04.89 Patentblatt 89/14**

(45) Bekanntmachung des Hinweises auf die
Patenterteilung:
**02.03.94 Patentblatt 94/09**

(84) Benannte Vertragsstaaten:
**AT BE CH DE ES FR GB GR IT LI LU NL SE**

(56) Entgegenhaltungen:
**EP-A- 0 106 534
DE-C- 3 432 653
US-A- 4 319 273**

(73) Patentinhaber: **Deutsche Thomson-Brandt GmbH
Hermann-Schwer-Strasse 3
Postfach 1307
D-78003 Villingen-Schwenningen(DE)**

(72) Erfinder: **Guillon, Jean-Claude
10, Rue de Provence Gerstheim
F-67150 Erstein(FR)**
Erfinder: **Daniel, Patrick,
Adlerring 24
D-7730 VS-Villingen(DE)**

## Beschreibung

Fernsehprogramme von privaten Anbietern, die aus Zuschauerbeträgen finanziert werden, können zwecks Ausschlusses unberechtigter Zuschauer verschlüsselt dargestellt werden. Zum Empfang sind besondere Decoder notwendig, die vom Programmanbieter gegen entsprechende Gebühr zur Verfügung gestellt werden. Diese Decoder können z.B. ein in dem Video-Signal vorhandenes Signum auswerten und geben erst bei Erkennen des Signums den Decoder frei, sodaß dieser das empfangene Fernsehbild entschlüsselt darstellt. In der Praxis besteht ein Problem darin, das Signum auch im Störungsfalle deutlich zu erkennen, um den Berechtigten die Entschlüsselung des Programms zu ermöglichen, bei Nichtvorhandensein des Signums aber den Decoder zu sperren.

In US-A-4 319 273 werden statt des Synchronimpulses in ein Videosignal eingesetzte Signalanteile empfängerseitig mittels Korrelation mit gespeicherten Referenzwerten detektiert. Anschließend werden im Empfänger die normgemäßen Synchronimpulse wieder eingesetzt.

In DE-C-3 432 653 werden mittels Korrelation solche Bildteile ermittelt, die sich zeitlich nicht geändert haben. Für diese Bildteile werden dann Ersatzdaten übertragen.

EP-A-0 106 534 beschreibt eine Muster-Erkennung, bei der jedoch Übertragungskanal-Störungen keine Rolle spielen.

Der Erfindung liegt die Aufgabe zugrunde, ein Verfahren und eine Vorrichtung anzugeben, die auch bei gestörten Signalen die Erkennung des Signums ermöglichen.

Diese Aufgabe wird durch das Verfahren nach Anspruch 1 und durch die Vorrichtung nach Anspruch 5 gelöst.

Das Verfahren und die Vorrichtung nach der Erfindung lassen Störungen in gewissen Grenzen zu, wie sie bei schlechten Übertragungswegen oder durch in den Übertragungsweg eindringende Störungen auftreten können. Erst bei einem Ausmaß der Störungen, die keine zuverlässige Aussage mehr ermöglicht, ob noch das Signum oder ein ähnliches Signal vorliegt, wird die Erkennung negativ.

Weiterbildung und vorteilhafte Ausführungsformen ergeben sich aus der weiteren Beschreibung, sowie der Zeichnung.

Die Erfindung wird anhand der Zeichnung näher erläutert.

| | |
|---|---|
| Fig. 1a,b | zeigt als Beispiel ein Signum, sowie die von diesem eingenommene Fläche auf einem Bildschirm, |
| Fig. 2 | zeigt ein Blockschaltbild zur Berechnung einer Korrelations-Funktion, |
| Fig. 3 | zeigt ein Ausführungsbeispiel für eine Verknüpfungsschaltung aus dem Blockschaltbild Fig. 2, |
| Fig. 4a,b | zeigt ein vollständiges Blockschaltbild zur Auswertung eines Signums, |
| Fig. 5 | zeigt die sich aus der Korrelations-Funktion ergebende Kurve im ungestörten und im gestörten Fall, |
| Fig. 6 | zeigt eine Tabelle der mit der Korrelations-Funktion berechneten Werte und |
| Fig. 7 | zeigt ein Flußdiagramm zur Auswertung der Tabelle. |

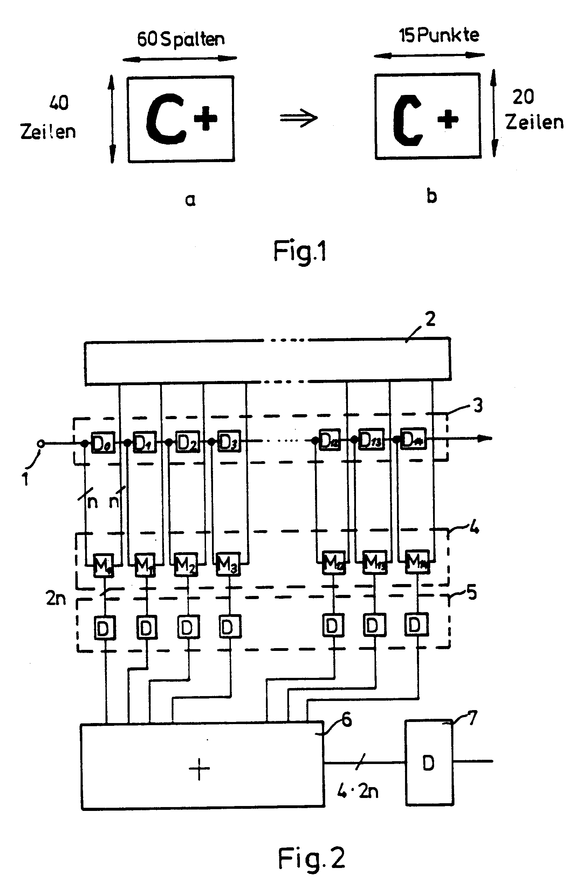

Bei dem in Fig. 1a dargestellten Signum handelt es sich um einen Buchstaben "C" mit einem " + "-Zeichen. Die Größe des Signums nimmt in Fig. 1b ungefähr vierzig Zeilen mit jeweils sechzig Bildpunkten in Anspruch. Das ergibt 2400 Bildpunkte. Bei der Erkennung wird nur das Luminanzsignal ausgewertet. Das Prinzip besteht darin, den Bildinhalt mit dem Inhalt eines Speichers zu vergleichen.

Eine richtige Erkennung des Signums kann durch folgende Einflüsse gestört werden:

- Variationen der Amplitude
- Störsignale
- Variationen in der Phase.

Ein Schutz gegen Amplituden-Störungen läßt sich durch Aussenden einer oder zweier weißer Zeilen pro Halbbild zur Ansteuerung einer Verstärkungsregelung bewirken. Eine andere Möglichkeit besteht darin, ein Signal in einem Fenster zu detektieren, wobei z.B. insgesamt vier Fenster vorgesehen werden können. Eine dritte Möglichkeit besteht darin, ein kontrastreiches Luminanzsignal anzubieten.

Ein Schutz gegen Störungen läßt sich durch analoge Tiefpass-Filter und/oder durch Erwarten eines Ereignisses in einem Fenster, oder durch Berechnung einer Korrelations-Funktion des empfangenen Signals im Vergleich zu einem Referenzsignal bewirken.

Ein Schutz gegen Phasenänderungen besteht darin, wenig Änderungen beim Video-Signal zuzulassen, man könnte dann einen Taktgenerator zur Synchronisation benutzen, oder - wie im vorgenannten Fall - die Berechnung der Korrelations-Funktion des Signals mit einem Referenzsignal durchzuführen.

Eine zur Korrelation von zwei verschiedenen Signalen geeignete Korrelationsfunktion stellt folgender mathematischer Ausdruck dar:

$$f_{xy}(k) = \lim_{k \to \infty} \frac{1}{2K-k} \sum^{k} x(i)\; y(i+k)$$

Diese Formel zeigt, daß jeder Punkt der Korrelationsfunktion die Summe des Produkts eines Paares von Bildpunkten bei einem gegebenen Phasenwert zwischen den unterschiedlichen Signalen darstellt. Der maximale Wert wird dann erhalten, wenn beide Signale dieselbe Phase besitzen.

Eine geeignete Korrelations-Schaltung ist in Fig. 2 dargestellt. Dieser werden über eine Eingangsklemme 1 mit n-Bit quantisierte digitale Signale zugeführt, die mit in einem Speicher 2 gespeicherten Referenzwerten verknüpft werden sollen. Die Schaltung umfaßt ein Schieberegister 3, das eine Anzahl D-Flip-Flop-Stufen D0-D14 enthält, in die die Signale, also die zu untersuchenden 15 Punkte je Zeile seriell eingeschrieben werden. Die Anzahl der D-Flip-Flop-Stufen entspricht daher der Anzahl der Punkte je Bildzeile. Die Zahl der im Speicher 2 für jede Zeile gespeicherten Referenzwerte beträgt ebenfalls 15.

Vom Eingang jeder D-Flip-Flop-Stufe D0-D14 sowie von den Ausgängen des Speichers 2 führen Leitungen zu einer logischen Verknüpfungsschaltungsanordnung 4 mit Verknüpfungsschaltungen M0-M14. Die Anzahl n der Leitungen entspricht der Anzahl n der Bits, mit der jeder Bildpunkt quantisiert ist. Die Verknüpfungsschaltungen M0-M14 können Multiplikationsschaltungen und zwar im einfachsten Falle Antivalenzschaltungen sein. Vom Ausgang der Verknüpfungsschaltungen M0-M14 führen weitere Leitungen zu einer Speicheranordnung 5 aus D-Flip-Flops und von dort zu einer Summationsschaltung 6. In der Summationsschaltung 6 werden die korrelierten Werte aufsummiert. Bei fehlender Übereinstimmung der Signale ergibt sich der Wert 0, bei vollständiger Übereinstimmung der Wert 15 pro Bit und Bildpunkt.

Der Ausgang der Summationsschaltung 6 ist mit einem Zwischenspeicher 7 verbunden, an dem die Summen für jede untersuchte Zeile zwischenspeicherbar sind. Entsprechend der Anzahl n der Bit, die zur Bestimmung jedes Bildpunktes verwendet werden, sind am Ausgangs der Summationsschaltung 6 4 x 2 x n Leitungen erforderlich.

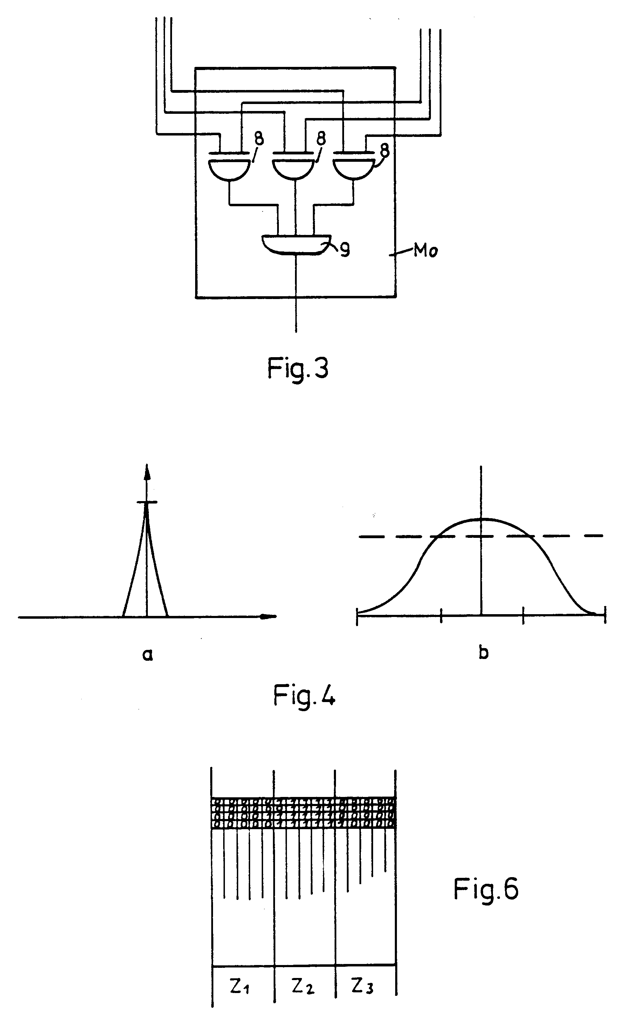

Eine Ausgestaltung der Verknüpfungsschaltungen M0-M14, bei der drei Bit pro Bildpunkt korreliert werden, zeigt Fig. 3. Die Verknüpfungsschaltung ist hier durch eine Antivalenzschaltung mit drei Exklusiv-ODER-Gattern 8 sowie einem UND-Gatter 9 ausgeführt.

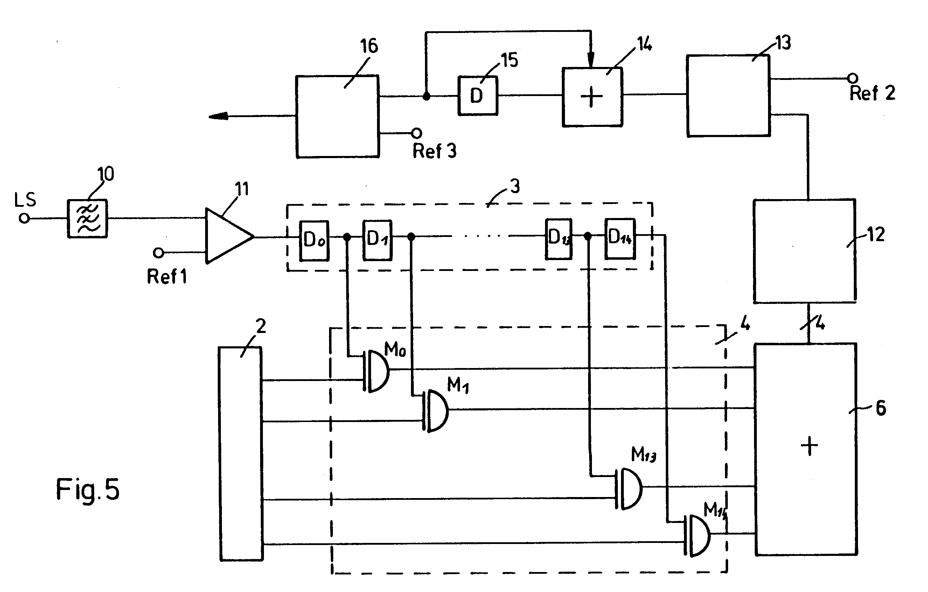

Fig. 5 zeigt ein vollständiges Blockschaltbild zur Auswertung eines Signums. Das analoge Videosignal, insbesondere das Lumminanzsignal LS wird über ein Tiefpaßfilter 10 geleitet, dessen Grenzfrequenz so bemessen ist, daß vier Bildpunkte und zwei aufeinanderfolgende Zeilen einen auszuwertenden Punkt einer Zeile ergeben. Anschließend wird mit einem Komparator 11, dem eine Referenzspannung Ref1 zugeführt wird, das Videosignal so quantisiert, daß ein Punkt mit einem Bit beschrieben ist. Nach dem Komparator 11 folgt ein Schieberegister 3 aus 15 D-Flip-Flops D0-D14, wobei im Unterschied zu Fig. 2 die Signale an den Ausgängen abgegriffen werden. Die Korrelation erfolgt mit Referenzwerten, die im Speicher 2 gespeichert sind. In der Verknüpfungsschaltungsanordnung 4 sind Äquivalenzglieder in Form von Exklusiv-ODER-Gattern M0-M14 vorgesehen, der sowohl die Ausgangssignale der D-Flip-Flops D0-D14 des Schieberegisters 3 als auch der Ausgänge des Speichers 2 zugeführt sind. Die Ausgänge der Exklusiv-ODER-Gatter M0-M14 führen zu einer Summationsschaltung 6 und von dort zu einem Speicher 12.

Innerhalb des Speichers 12 bilden die Speicherplätze eine Matrix, in der die korrelierten Werte von 15 Punkten in der horizontalen Erstreckung und 20 Zeilen in der vertikalen Erstreckung in Form von jeweils vierbit Worten gespeichert sind. Bei phasenrichtiger Übereinstimmung zwischen dem digitalen Eingangssignal LS und dem durch die Folge der Referenzwerte gebildeten virtuellen Referenzsignal ergibt sich für jede Zeile in der Mitte ein Maximum. Die analoge Darstellung für eine Zeile bei Störungsfreiheit ist in Fig. 4a durch die schmale Kurve wiedergegeben. Bei Anwensenheit von Störungen ergibt sich die in Fig. 4b dargestellte Glockenkurve.

Um ein richtiges, aber gestörtes Signum von einem falschen Signum unterscheiden zu konnen, wird als Unterscheidungskriterium eine Schwelle in die Glockenkurve hineingelegt, oberhalb der die Werte der Glockenkurve den Wert 1 und unterhalb den Wert 0 zugewiesen bekommen. Dies geschieht für jede horizontale Zeile der Matrix mittels eines Komparators 13. Diesem Komparator werden jeweils nacheinander die korrelierte Werte aus dem Speicher 12 über einen ersten Eingang und die Schwelle als Ref2 über einen zweiten Eingang zugeführt.

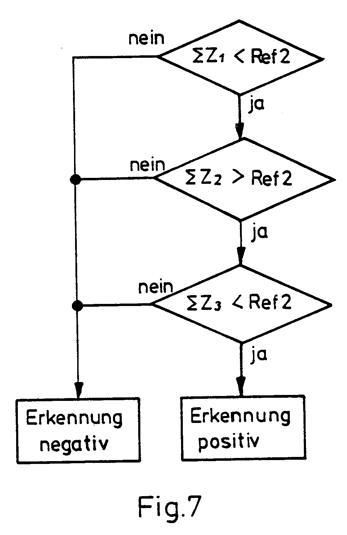

Durch die Schwelle wird die Matrix bildlich in drei Zonen Z1, Z2, Z3 aufgeteilt, wie es Fig. 6 zeigt. In dieser Matrix müßten bei richtiger Lage der Schwelle in den beiden Randzonen Z1 und Z3 nur Nullen und in der mittleren Zone Z1 nur Einsen vorhanden sein. In der Praxis wird dies aber nicht immer der Fall sein, wenn z.B. durch Phasen- und/oder Amplitudenstörungen des das Signum wiedergebenden Signals diese stark von dem Referenzsignal abweicht. In diesem Falle können auch in den Randzonen Z1 und Z3 Einsen auftreten, während in der mittleren Zone Z1 Nullen vorhanden sein können.

Bei einer Fehlerquote von z.B. 20% der in den Zonen Z1, Z2 und Z3 vorhandenen Werten soll das Signum noch als richtig erkannt gelten. Zur Auswertung dieser Fehlerquote dient die nachfolgende Summationsschaltung 14 mit der anschließenden Verzögerungsschaltung 15 und dem Komparator 16. Vom Ausgang der Verzögerungsschaltung 15 ist eine Rückführung zur Summationsschaltung 14 vorhanden. Es werden dabei für jede Zeile nacheinander die unter Berücksichtigung der Glockenkurve als "1" oder "0" quantisierten Werte der korrelierten Werte summiert und das Ergebnis dem weiteren Komparator 16 zugeführt. Bei Zulassung einer 20%igen Fehlquote ist dann der Referenzwert Ref3, der dem Komparator 16 zugeführt wird, 20% unterhalb des Maximalwertes festgesetzt, der sich bei fehlerfreiem Videosignal des Signums ergeben würde. Der Zustand am Ausgang des Komparators 16 ist dann letztlich maßgebend für eine Erkennung oder Nichterkennung des Signums. Mit dem Ausgangssignal des Komparators 16 kann somit ein nachfolgender, hier nicht dargestellter Decoder angesteuert werden, der bei Erkennung des Signums den Decoder frei gibt und nicht bei Nichterkennung sperrt. Der Decoder ermöglicht dann das verschlüsselte restliche Videosignal so zu decodieren, daß der Zuschauer das Programm einwandfrei verfolgen kann.

In Fig. 7 ist die von den zuletzt genannten Schaltungsteilen aus der Summationsschaltung 14, der Verzögerungsschaltung 15 und dem Komparator 16 vorgenommene Auswertevorgang in Form eines Flußdiagramms dargestellt. Es werden hier die Zonen Z1, Z2 und Z3 in drei Schritten überprüft, bei Erfüllung der Summenbedingungen wird das Signum als erkannt, bei Nichterfüllung als nichterkannt gewertet.

**Patentansprüche**

1. Verfahren zur empfängerseitigen Erkennung eines quellenseitig in ein Video-Signal eingefügten, festgelegten Signal-Anteils (Fig. 1) durch eine zeilenweise Korrelation (4) dieses festgelegten Signal-Anteils mit empfängerseitig gespeicherten (2) Referenzwerten, **gekennzeichnet durch**:
   - der festgelegte Signal-Anteil besteht aus einer Gruppe von untereinander angeordneten Zeilen-Abschnitten des auf einem Bildschirm sichtbaren Teils des Video-Signals;
   - der Luminanz-Anteil (LS) der Zeilenabschnitte dieses festgelegten Signal-Anteils wird in Bildpunkt-Werte quantisiert (11);
   - diese Bildpunkt-Werte werden mit den gespeicherten (2) Referenzwerten korreliert (3, 4, 6), wobei die sich ergebenden einzelnen Korrelationsergebnisse innerhalb jedes Zeilen-Abschnitts und für alle Zeilen-Abschnitte der Gruppe jeweils eine Matrix (Fig. 6) bilden und mit einem Schwellwert (Ref2) verglichen (13) werden um die Matrix in drei Spalten-Gruppen (Z1,Z2,Z3) einzuteilen;
   - die Werte innerhalb jeder dieser Spalten-Gruppen werden aufsummiert (14, 15);
   - die drei Ergebnis-Werte werden jeweils mit einem weiteren Schwellwert (Ref3) zur Bildung von Fehlerquoten verglichen (16); .
   - wenn die aus dem Vergleich mit dem weiteren Schwellwert resultierende Fehlerquote für jede der Spalten-Gruppen ein jeweiliges Kriterium erfüllt, wird das Vorliegen des festgelegten Signal-Anteils (Fig. 1) angenommen.

2. Verfahren nach Anspruch 1, **dadurch gekennzeichnet**, daß die Quantisierung eine 1bit-Quantisierung (11, Ref1) ist.

3. Verfahren nach Anspruch 1 oder 2, **dadurch gekennzeichnet**, daß der festgelegte Signal-Anteil ein Sender-Signum (Fig. 1a) ist, insbesondere mit 60 Bildpunkten in den Zeilenabschnitten und 40 Zeilen-Abschnitten.

4. Verfahren nach einem oder mehreren der Ansprüche 1 bis 3, **dadurch gekennzeichnet**, daß der festgelegte Signal-Anteil vor der Quantisierung (11) so tiefpaß-gefiltert (10) wird, daß aus je vier aufeinanderfolgenden Bildpunkten aus jeweils zwei aufeinanderfolgenden Zeilenabschnitten ein Bildpunkt für die Quantisierung gebildet wird.

5. Vorrichtung zur empfängerseitigen Erkennung eines quellenseitig in ein Video-Signal eingefügten, festgelegten Signal-Anteils (Fig. 1) durch eine zeilenweise Korrelation (4) dieses festgelegten Signal-Anteils mit empfängerseitig gespeicherten (2) Referenzwerten, **gekennzeichnet durch**:

- Quantisier-Mittel (11) zur Erzeugung von Bildpunkt-Werten aus dem Luminanz-Anteil (LS) von Zeilenabschnitten dieses festgelegten Signal-Anteils, wobei der festgelegte Signal-Anteil aus einer Gruppe von untereinander angeordneten Zeilen-Abschnitten des auf einem Bildschirm sichtbaren Teils des Video-Signals besteht;
- Korrelations-Mittel (3, 4, 6), die diese Bildpunkt-Werte mit den in Speichermitteln (2) gespeicherten Referenzwerten korrelieren, wobei die sich ergebenden einzelnen Korrelationsergebnisse innerhalb jedes Zeilen-Abschnitts und für alle Zeilen-Abschnitte der Gruppe eine Matrix (Fig. 6) bilden, die zwischengespeichert wird, und wobei die aus dem Zwischenspeicher gelesenen Korrelationsergebnisse jeweils in Komparator-Mitteln (13) mit einem Schwellwert (Ref2) verglichen werden, um die Matrix in drei Spalten-Gruppen einzuteilen;
- Summier-Mittel (14, 15), die die Werte in dieser Matrix innerhalb der drei Spalten-Gruppen (Z1, Z2, Z3) aufsummieren;
- weitere Komparator-Mittel (16), die die drei aufsummierten Ergebnis-Werte jeweils mit einem weiteren Schwellwert (Ref3) zur Bildung von Fehlerquoten vergleichen.

## Claims

1. Method of recognition by a receiver of a fixed signal portion (Figure 1) included at source in a video signal by means of a line-by-line correlation (4) of this fixed signal portion with reference values stored in the receiver, characterised in that:
   - the fixed signal portion consists of a group of line sections of the part of the video signal which is visible on a screen, the said line sections being arranged one below the other;
   - the luminance portion (LS) of the line sections of this fixed signal portion is quantised in picture point values (11);
   - these picture point values are correlated (3, 4, 6) with the stored (2) reference values, wherein the individual results of correlation within each line section and for all line sections of the group in each case form a matrix (Figure 6) and are compared (13) with a threshold value (Ref2) in order to divide the matrix into three column groups (Z1, Z2, Z3);
   - the values within each of these column groups are added up (14, 15);
   - the three resulting values are each compared (16) with a further threshold value (Ref3) to form error rates;
   - when the error rate for each of the column groups resulting from the comparison with the further threshold value meets a particular criterion the presence of the fixed signal portion (Figure 1) is assumed.

2. Method according to Claim 1, characterised in that the quantisation is a 1-bit quantisation (11, Ref1).

3. Method according to Claim 1 or 2, characterised in that the fixed signal portion is a transmitter identification sign (Figure 1a), particularly with 60 picture points in the line sections and 40 line sections.

4. Method according to one or several of Claims 1 to 3, characterised in that the fixed signal portion is low-pass filtered (10) before the quantisation so that a picture point for the quantisation is formed from each four successive picture points of each two successive line sections.

5. Method of recognition by the receiver of a fixed signal portion (Figure 1) included at source in a video signal by means of a line-by-line correlation (4) of this fixed signal portion with reference values stored (2) in the receiver, characterised by:
   - quantising means (11) for producing picture point values from the luminance portion (LS) of line sections of this fixed signal portion, the fixed signal portion consisting of a group of line sections of the part of the video signal which is visible on the screen, the said line sections being arranged one below the other;
   - correlation means (3, 4, 6) which correlate these picture point values with the reference values stored in the storage means (2), wherein the individual results of correlation within each line section and for all line sections of the group form a matrix (Figure 6) which is stored temporarily, and wherein the results of correlation read out of the intermediate store are compared in each case in comparator means (13) with a threshold value (Ref2) in order to divide the matrix into three column groups;

- summation means (14, 15) which add up the values in this matrix within the three column groups (Z1, Z2, Z3);
- further comparator means (16) which compare each of the three results of the summation with a threshold value (Ref3) in order to form error rates.

**Revendications**

1. Procédé pour la reconnaissance côté récepteur d'une fraction de signal fixée (fig. 1), insérée côté source dans un signal vidéo, par une corrélation ligne par ligne (4) de cette fraction de signal fixée avec des valeurs de référence mémorisées (2) côté récepteur, **caractérisé par** :
   - la fraction de signal fixée se compose d'un groupe de sections de lignes placées les unes sous les autres de la partie visible sur l'écran du signal vidéo ;
   - la fraction de luminance (LS) des sections de ligne de cette fraction de signal fixée est quantifiée (11) en valeurs de points d'image ;
   - ces valeurs de points d'image sont corrélées (3, 4, 6) avec les valeurs de référence mémorisées (2), les différents résultats de corrélation qui en résultent au sein de chaque section de ligne et pour toutes les sections de lignes du groupe formant respectivement une matrice (figure 6) et étant comparées (13) à une valeur de seuil (Ref2) pour répartir la matrice en trois groupes de colonnes (Z1, Z2, Z3) ;
   - les valeurs au sein de chacun des groupes de colonnes sont additionnées (14, 15);
   - les trois valeurs des résultats sont comparées (16) chacune à une autre valeur de seuil (Ref3) pour former des taux d'erreurs ;
   - lorsque le taux d'erreurs qui résulte de la comparaison avec l'autre valeur de seuil pour chacun des groupes de colonnes remplit un critère correspondant, l'existence de la fraction de signal fixée (fig. 1) est supposée.

2. Procédé selon la revendication 1, **caractérisé en ce** que la quantification est une quantification à 1 bit (11, Ref1).

3. Procédé selon la revendication 1 ou 2, **caractérisé en ce** que la fraction de signal fixée est un signe d'émetteur (fig. 1a), en particulier avec 60 points d'image dans les sections de lignes et des sections de 40 lignes.

4. Procédé selon l'une ou plusieurs des revendications 1 à 3, **caractérisé en ce** que la fraction de signal fixée passe par un filtre passe-bas (10) avant la quantification (11) si bien qu'à partir de respectivement quatre points d'image qui se succèdent de respectivement deux sections de lignes successives il est formé un point d'image pour la quantification.

5. Dispositif pour la reconnaissance côté récepteur d'une fraction de signal fixée (fig. 1), insérée côté source dans un signal vidéo, par une corrélation ligne par ligne (4) de cette fraction de signal fixée avec des valeurs de référence mémorisées (2) côté récepteur, **caractérisé par** :
   - des moyens de quantification (11) pour produire des valeurs de points d'image à partir de la fraction de luminance (LS) de sections de lignes de cette fraction de signal fixée, la fraction de signal fixée étant constituée par un groupe de sections de lignes placées les unes sous les autres de la partie visible sur l'écran du signal vidéo ;
   - des moyens de corrélation (3, 4, 6) qui corrélent ces valeurs de points d'image avec les valeurs de référence mémorisées dans les moyens de mémorisation (2), les différents résultats de corrélation qui en résultent au sein de chaque section de lignes et pour toutes les sections de lignes du groupe formant une matrice (fig. 6) qui est mise en mémoire temporaire, les résultats de corrélation lus à partir de la mémoire intermédiaire étant respectivement comparés dans des moyens de comparaison (13) à une valeur de seuil (Ref2) pour répartir et la matrice en trois groupes de colonnes ;
   - des moyens d'addition (14, 15) qui additionnent les valeurs dans cette matrice au sein des trois groupes de colonnes (Z1, Z2, Z3) ;
   - d'autres moyens de comparaison (16) qui comparent les trois valeurs des résultats additionnés respectivement à une autre valeur de seuil (Ref3) pour former des taux d'erreurs.

Fig.1

Fig.2

Fig. 3

Fig. 4

a

b

Fig. 6

$Z_1$ | $Z_2$ | $Z_3$

Fig. 5

EP 0 309 905 B1

nein     $\Sigma Z_1 < Ref\,2$

ja

nein     $\Sigma Z_2 > Ref\,2$

ja

nein     $\Sigma Z_3 < Ref\,2$

ja

Erkennung negativ

Erkennung positiv

Fig.7